# EUROPEAN PATENT SPECIFICATION

(11) **EP 4 033 273 B1**
(45) Date of publication and mention of the grant of the patent: **03.07.2024**
(21) Application number: 22152351.7
(22) Date of filing: 20.01.2022
(51) Int. Cl.: G01W 1/02, G01D 21/02

(54) **ENVIRONMENTAL MONITORING DEVICE AND SYSTEM**
GERÄT UND SYSTEM ZUR UMGEBUNGSÜBERWACHUNG
DISPOSITIF ET SYSTEME DE SURVEILLANCE ENVIRONNEMENTALE

(30) Priority: 20.01.2021 IT 202100000917
(43) Date of publication of application: 27.07.2022
(73) Proprietor: H&S Engineering S.r.l., 20122 Milano MI (IT)
(72) Inventor: RAPACIOLI, Luca, 29121 PIACENZA (IT)
(74) Representative: Zermani Biondi Orsi, Umberto

(56) References cited:
- GB-A- 2 563 408
- US-A- 5 920 827
- US-A1- 2018 322 454
- US-A1- 2018 338 561

## Description

The present invention relates to an environmental monitoring device and system.

Therefore, the present invention finds its main application in the electronics sector, in particular in the field of remote monitoring and detection of environmental parameters.

In recent years, and especially in the current global pandemic situation linked to COVID-19, there has been an increasing need to monitor the health of both work and domestic environments, thus detecting possible actions aimed at improving the quality of the environments and, consequently, increasing the well-being of those who live there or go there frequently. Until now, however, technology has focused on the creation of systems for domestic use optimized for the detection of individual measurement parameters.

The aforementioned solutions do not provide the comparison of transmitted data or the aggregation of information measured through a variable number of devices, nor the comparative analysis of data of a different nature.

In the vast majority of cases, these solutions also require a connection to a home Internet network (Wi-Fi or wired) and/or an electrical connection.

It is also true that some devices already on the market provide the use of batteries and SIM cards allowing them to work self-sufficiently, but it is necessary to point out that such solutions use 3G/4G SIMs, therefore requiring significant consumption and binding the use to environments covered by standard 3G/4G networks.

In the prior art, therefore, various devices are known which are capable of detecting specific environmental parameters through the use of sensors, but these are most of the times very specific and inefficient either due to low performance sensors, architectures needing a wi-fi^{®} support or special additions to pre-existing systems. One of these devices is known from document US2018/322454.

Therefore, it is an object of the present invention to provide an environmental monitoring device and system, which is capable of overcoming these technical drawbacks.

More precisely, it is an object of the present invention to provide a compact and self-sufficient environmental monitoring device.

Moreover, it is an object of the present invention to provide a system for environmental monitoring that is widespread and at the same time easy to query by users.

Said objects are achieved by means of an environmental monitoring system according to claim 1 comprising among others an environmental monitoring device. having the features listed in one or more of the subsequent claims.

In particular, the monitoring device comprises a containment body, a processing unit housed in said containment body and a transceiver connected to the processing unit and provided with a housing portion for a smart-card and at least one antenna for long-range, wireless data transmission.

The device further comprises a first, brightness sensor, housed in the containment body and externally facing it to detect the brightness of an environment in which the device is situated, and a second sensor, for detecting environmental parameters, housed in the containment body and configured to measure multiple quantities representing, respectively, temperature, pressure, and degree of humidity in the environment in which the device is located.

According to the claimed invention, the second sensor is also configured to detect air quality.

To power the device, a battery pack and/or a power supply unit that can be connected to the grid is/are provided housed in the containment body. According to the invention, the processing unit is configured to:
- receive from the antenna of the transceiver a first, configuration signal, representing a reference time and/or date of the device and a time frequency for activation thereof;
- initiate a measuring procedure wherein:
   it sends to said first and second sensors a second, interrogation signal at intervals corresponding to said time frequency;
   receives from said first and second sensors respective third, measuring signals, representing the measurements made by the first and second sensors following the receipt of said second signal;
   sends to said antenna of the transceiver a fourth, transmission signal containing information representing the third signals and a time and/or date of sending of the second signal and/or of receipt of the third signals.

The system further comprises at least one message broker, a queue management module, a configuration module, a processing module, and at least one remote electronic device.

According to the claimed invention, one or more databases are provided, which are designed to contain data representing configuration settings or parameters of the environmental monitoring device(s) and data representing the measurements made by the environmental monitoring device(s).

Each monitoring device is configured in order to:
send the broker a sixth, measuring signal containing information corresponding to said fourth signal with said time frequency;
generate a seventh, start signal representing a configuration request;

The broker is configured to generate an eighth, data update signal corresponding to said sixth signal.

The queue management module is configured to sort the eighth signals received from the broker and to send a corresponding ninth signal to a database of said one or more databases.

The configuration module is arranged to receive the seventh signal and configured to interrogate a database of said one or more databases in order to obtain data representing configuration settings or parameters of the environmental monitoring device(s), and to generate the first, configuration signal.

The processing module is configured to interrogate said one or more databases and to generate information representing the data contained in said one or more databases.

The remote electronic device comprises a user interface configured to interrogate the processing module and display said information representing the data contained in said one or more databases to the user.

The dependent claims, hereby incorporated by reference, correspond to different embodiments of the invention.

Further features and advantages of the present invention will become more apparent from the indicative, and therefore non-limiting description of a preferred, but not exclusive, embodiment of an environmental monitoring device and system, as illustrated in the accompanying drawings, wherein:

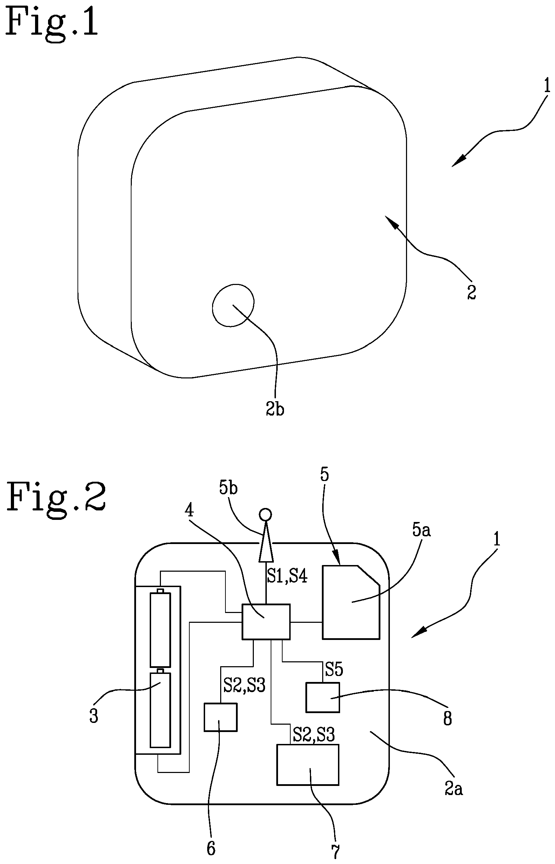

- Figure 1 is a perspective view of an environmental monitoring device in accordance with the present invention;
- Figure 2 shows a functional diagram of the monitoring device in Figure 1;

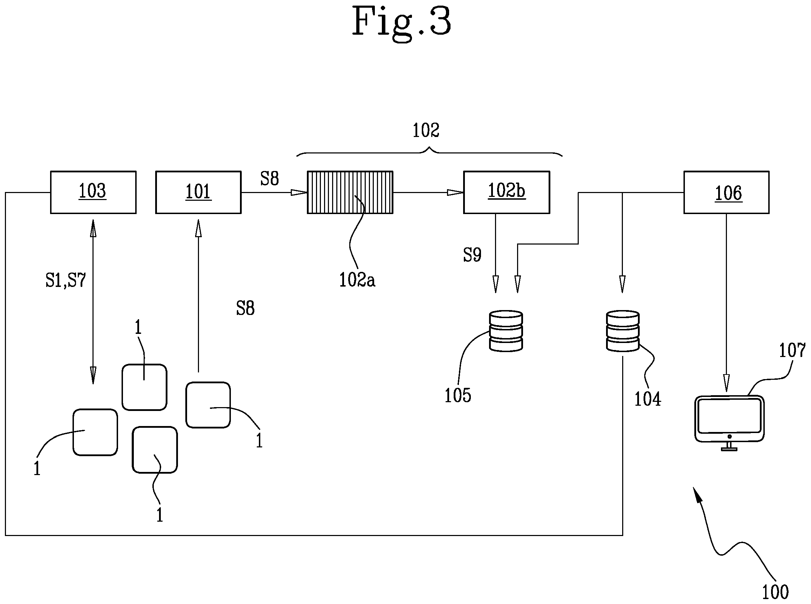

- Figure 3 shows an architecture of an environmental monitoring system in accordance with the present invention.

With reference to the accompanying drawings, the numeral 1 indicates, as a whole, an environmental monitoring device in accordance with the present invention.

The device 1 comprises a containment body 2 inside which the electronics are housed.

The containment body 2 is preferably defined by a moulded plastic casing delimiting an internal volume 2a for housing one or more electronic boards and at least one battery pack 3.

Said containment body 2 is further provided with at least one light-permeable window 2b, such as to allow the passage of light rays into the volume 2a.

In the preferred embodiment, the containment body 2 has two substantially polygonal, preferably rectangular half-shells (with bevelled corners) which are joined together and provided, at a respective lower edge, with one or more supports 2c.

Said supports 2c are shaped to maintain the containment body 2, and therefore the device, in an upright position, i.e., with the polygonal faces of the half-shells oriented vertically.

A section is also provided for housing the battery pack 3 and/or a power supply unit that can be connected to the grid.

Preferably, both options are provided, with the housing for the battery pack 3 connected in parallel (or sometimes in series) to the power supply unit. As mentioned, all the electronics of the device, including a processing unit 4 and a transceiver 5, are housed inside the containment body 2.

The transceiver 5 is connected to the processing unit 4 and provided with a housing portion 5a for a smart-card SC and at least one antenna 5b for long-range, wireless data transmission.

Preferably, the transceiver is defined by an NB loT (Narrow Band Internet of Things) module configured to take advantage of the LPWAN (Low Power wide Area Network) radio technology standard to allow low-flow communication with a wide range of devices.

In accordance with this, the smart-card SC is defined by an appropriate NB loT SIM.

Advantageously, this allows wide coverage while maintaining very low energy consumption, ideal for monitoring systems that must guarantee continuous functionality for long time intervals even in the absence of power supply from the grid (which is not necessarily available). Preferably, in this regard, the processing unit 4 can be selectively switched between a first, resting and low-energy consumption mode and a second, measuring and high-energy consumption mode.

The processing unit 4 is normally in the first mode and configured to switch between the first and second modes only to perform a measuring procedure at predetermined time intervals (as will be shown below).

In a condition of normal use, therefore, the device 1 works almost all the time in the first mode (sleep mode), "waking up" at regular and preestablished intervals exclusively for the time needed to collect the environmental parameters.

Preferably, moreover, the processing unit 4 is integrated into the transceiver 5.

In the preferred embodiment, the device 1 is further provided with an electricity consumption meter (not shown), configured to detect electricity consumption continuously over time.

A further optional feature of the device 1 is the provision of one or more visual interface elements 9, such as LEDs or the like, externally facing the containment body 2 and configured to provide chromatic information representing the operating state of the device 1, advantageously allowing it to be monitored even at a distance.

The device 1 further comprises a first, brightness sensor 6 connected to the processing unit 4, housed in the containment body 2, and externally facing it through the window 2b, so as to detect the brightness of the environment in which the device 1 is situated.

The first sensor 6 is therefore configured to evaluate the brightness in a given environment, detecting values within a scale preferably ranging from a minimum of 600ms to a maximum of 4800ms.

Also provided is a second sensor 7, for detecting environmental parameters, housed in the containment body 4, connected to the processing unit 4 and configured to measure multiple quantities representing respective environmental parameters.

By way of example, these parameters can be one or more of the following:
- temperature,
- pressure,
- degree of humidity of the environment in which the device 1 is located,
- air quality of the environment in which the device is located 1.

In the preferred embodiment, this second sensor 7 integrates all the functions listed above.

In other words, the second sensor 7 comprises a single chip, known per se, capable of detecting all the quantities of interest; in greater detail, the signal relating to air quality is sent to the processing unit and then processed through a particular algorithm that takes into account the various concentrations provided by the sensor; four types of measurement can be carried out.

In the preferred embodiment, moreover, the device 1 comprises a third sensor 8, housed in the containment body 2, connected to the processing unit 4 and configured to detect oscillations to which the containment body 2 is subjected.

Preferably, this third sensor 8 is defined by an accelerometer. This third sensor 8 has a first, active and low-energy consumption mode of operation, and a second, active and high-energy consumption mode of operation.

The third sensor 8 is calibrated to always remain in semi-alert mode (first mode) ready to enter full power mode (second mode) as soon as an oscillation exceeding a certain threshold occurs. From that moment on, the third sensor switches to the second mode to sample at its maximum performance (approximately 1000 samples per second) in order to record the event concerned.

It should be noted that, preferably, said third sensor 8 is configured to generate a signal, hereinafter referred to as the fifth signal S5, representing said oscillation detection (i.e., when said threshold is exceeded) and to send said fifth signal to the processing unit 4.

The processing unit 4, in turn, is configured to start a measuring procedure with the remaining sensors (first 6 and second 7) upon receipt of said fifth signal S5.

Advantageously, in this way, the device 1 can monitor the environment at predefined intervals but can also intervene with appropriate measurements in case of unforeseeable events.

According to one aspect of the invention, regardless of the presence or absence of the third sensor 8, the processing unit 4 is configured to:
- receive from the antenna 5b of the transceiver 5 a first, configuration signal S1, representing a reference time and/or date of the device 1 and a time frequency for activation thereof;
- initiate a measuring procedure at predetermined intervals and/or upon receipt of an external signal.

Said measuring procedure comprising:
- sending to said first 6 and second sensors 7 a second, interrogation signal S2 at intervals corresponding to said time frequency;
- receiving from said first 6 and second sensors 7 respective third, measuring signals S3, representing the measurements made by the first 6 and second sensors 7 following the receipt of said second signal;
- sending to said antenna 5b of the transceiver 5 a fourth, transmission signal S4 containing information representing the third signals and a time and/or date of sending of the second signal and/or of receipt of the third signals.

Preferably, in the embodiments also provided with the third sensor 8, the fourth signal S4 is integrated with information related to said fifth signal S5, i.e., integrated with data representing the oscillations detected.

As mentioned, this device 1 is used within a more complex environmental monitoring system 100.

In fact, the system 100 comprises one or more (preferably multiple) monitoring devices 1 according to the above, all associated with cloud computing provided with specific hardware and software features useful for efficient data transmission, receipt and display.

In greater detail, the system comprises at least one message broker 101, a queue management module 102, a configuration module 103, one or more databases 104, 105, a processing module 106, and at least one remote electronic device 107.

The message broker 101 is configured to take on, preferably using an MQTT protocol, the signals containing the measurements sent by the device(s) 1.

The MQTT (Message Queue Telemetry Transport) protocol is an ISO standard (ISO/IEC PRF 20922) publish-subscribe-based lightweight messaging protocol, known per se, running over TCP/IP.

The received signals are queued, according to what is indicated therein, in the relevant application queue.

In the preferred embodiment, the system 100 provides for the presence of a plurality of brokers 101 arranged in parallel with each other, so as to better distribute the load.

The queue management module 102 is configured to define ad-hoc message queues that can be used to distribute the load level and efficiently manage all signals received from the measuring devices 1, thus providing an organized and scalable output data flow.

The configuration module 103 is configured to allow configuration of the parameters of each monitoring device 1.

In particular, the configuration module 103 is configured to generate, according to a command given by a predefined operator or algorithm, the first signal S1 containing data representing one or more of the following parameters:
- address to which the sixth signals S6 (i.e., measurements) are to be transmitted;
- time frequency, i.e., the duration of the predefined time intervals;
- settings related to the activation thresholds of the third sensor and/or alarms;
- any firmware updates;
- application transmission queues, which would make it possible to provide potential customers with ad-hoc queues which can be read by any third-party software, making the device 1/system 100 easily integrable and flexible for any type of need.

Said one or more databases preferably comprise a first relational (SQL) database (104) designed to contain data representing configuration settings or parameters of the environmental monitoring device(s) 1.

In particular, the device 1 configuration data, user data, thresholds, and alarms are allocated in this first database 104.

Said one or more databases preferably also comprise a second relational or time series database 105 designed to contain data representing the measurements made by the environmental monitoring device(s) 1.

The first 104 and second 105 databases, both of the relational type, could be integrated into a single database.

Alternatively, the second database 105 could be of a non-relational type (noSQL).

Advantageously, the non-relational approach (no-SQL) would make it possible to have an archive designed to manage large amounts of data while maintaining high performance during data extraction and reading. On the other hand, the remote electronic device 107 is defined by any electronic device having Internet connectivity and provided with a user interface such as, for example, a PC, notebook, smartphone or tablet. According to the invention, therefore, each monitoring device 1 is configured to generate a seventh, start signal S7 representing a configuration request.

The configuration module 103 is therefore designed to receive the seventh signal S7 and interrogate one database of said one or more databases, preferably the first database 104, and generate the first configuration signal S1 as described above.

The device 1 is therefore configured to send the broker 101, with said time frequency, a sixth, measuring signal S6 (or "packet") containing information corresponding to the fourth signal S4.

In other words, at predetermined time intervals, each monitoring device 1 starts the measuring procedure and sends the broker the sixth signal S6, corresponding to the fourth signal S4 in terms of information.

The broker 101 is therefore configured to generate an eighth, data update signal S8, the information content of which corresponds to said sixth signal S6.

The queue management module 102 is therefore configured to sort the eighth signals S8 received from the broker(s) 101 and to send a corresponding ninth signal S9 to one database of said one or more databases, preferably to the second database 105.

Moving on to a description of the user side (i.e., front-end) of the architecture, the processing module 106 is configured to interrogate said one or more databases (i.e., the first 104 and/or the second 105 database) and generate information representing the data contained in said databases.

The present invention attains the intended objects and achieves important advantages.

In fact, the presence of a device 1 capable of maintaining a low-energy consumption condition for most of the time, only activating itself, when necessary (predetermined interval or accidental event), together with the use of NB loT protocols, allows the same to be completely self-sufficient both from the energy and computing point of view, allowing it to be placed in the most remote locations without affecting its efficiency.

Moreover, the provision of an architecture maximizing data transmission efficiency and allowing discrimination in the type of storage favours the querying of databases by the processing unit, making the system highly user friendly.

## Claims

1. An environmental monitoring system, comprising:
- environmental monitoring device (1) provided with:
- a containment body (2);
- a processing unit (4) housed in said containment body (2);
- a transceiver (5) connected to the processing unit (4) and provided with a housing portion (5a) for a smart-card (SC) and at least one antenna (5b) for long-range, wireless data transmission;
- a first, brightness sensor (6) connected to the processing unit (4), housed in the containment body (2), and externally facing it to detect the brightness of an environment in which the device is situated;
- a second sensor (7), for detecting environmental parameters, connected to the processing unit (4), housed in the containment body (2), and configured to measure multiple quantities representing, respectively, temperature, pressure, air quality, and degree of humidity in the environment in which the device is located;
- a battery pack (3) and/or a power supply unit that can be connected to the grid and that is housed in the containment body;
wherein said processing unit (4) is configured to:
o receive from the antenna of the transceiver (5) a first, configuration signal (S1), representing a reference time and/or date of the device and a time frequency for activation thereof;
o initiate a measuring procedure wherein:
it sends to said first (6) and second sensors (7) a second, interrogation signal (S2) at intervals corresponding to said time frequency;
receives from said first (6) and second sensors (7) respective third, measuring signals (S3), representing the measurements made by the first (6) and second sensors (7) following the receipt of said second signal (S2);
sends to said antenna (5b) of the transceiver (5) a fourth, transmission signal (S4) containing information representing the third signals (S3) and a time and/or date of sending of the second signal (S2) and/or of receipt of the third signals; the system being **characterized in that** it further comprises:
- at least one message broker (101);
- a queue management module (102);
- a configuration module (103);
- one or more databases (104, 105) designed to contain data representing configuration settings or parameters of the environmental monitoring device(s) (1) and data representing the measurements made by the environmental monitoring device(s) (1);
- a processing module (106);
- at least one remote electronic device (107),
wherein:
- each monitoring device (1) is configured in order to:
send the broker (101) a sixth, measuring signal (S6) containing information corresponding to said fourth signal (S4) with said time frequency;
generate a seventh, start signal (S7) representing a configuration request;
- said broker (101) is configured to generate an eighth, data update signal (S8) corresponding to said sixth signal (S6);
- said queue management module (102) is configured to sort the eighth signals (S8) received from the broker (101) and to send a corresponding ninth signal (S9) to at least one database of said one or more databases (104, 105);
- said configuration module (103) is arranged to receive the seventh signal (S7) and configured to interrogate at least one database (104, 105) of said one or more databases (104, 105) in order to obtain data representing configuration settings or parameters of the environmental monitoring device(s) (1), and to generate the first, configuration signal (S1);
- the processing module (106) is configured to interrogate said one or more databases (104, 105) and to generate information representing the data contained in said one or more databases (104, 105);
- the remote electronic device (107) comprises a user interface configured to interrogate the processing module (106) and display said information representing the data contained in said one or more databases (104, 105) to the user.

2. The system according to claim 1, wherein said processing unit (4) of the environmental monitoring device (1) can be selectively switched between a first, resting and low-energy consumption mode and a second, measuring and high-energy consumption mode; said processing unit (4) being normally in the first mode and configured to switch between the first and second modes only to perform said measuring procedure.

3. The system according to claim 1 or 2, wherein the environmental monitoring device (1) comprises a third sensor (8) configured to detect oscillations to which the containment body is subjected, preferably an accelerometer, and to generate a fifth signal (S5) representing said detection; said processing unit being configured to start said measuring procedure upon receipt of said fifth signal (S5) and to send the fourth signal (S4) integrated with information correlated to said fifth signal (S5) to said antenna (5b) of the transceiver (5).

4. The system according to any of the previous claims, wherein the processing unit (4) of the environmental monitoring device (1) is integrated into the transceiver (5).

5. The system according to claim 1, wherein said broker uses an MQTT protocol.

6. The system according to any of the preceding claims, wherein said one or more databases comprise at least a first relational database (104) designed to contain data representing configuration settings or parameters of the environmental monitoring device(s) (1).

7. The system according to any of the preceding claims, wherein said one or more databases comprise at least a second relational and/or time series database (105) containing data representing the measurements made by the environmental monitoring device(s) (1).

## Patentansprüche

1. System zur Umgebungsüberwachung, das Folgendes umfasst:
- ein Gerät zur Umgebungsüberwachung (1), ausgestattet mit:
- einem Umhüllungskörper (2);
- einer Verarbeitungseinheit (4), die in dem genannten Umhüllungskörper (2) untergebracht ist;
- einem Sendeempfänger (5), der mit der Verarbeitungseinheit (4) verbunden und mit einem Aufnahmeteil (5a) für eine Smartcard (SC) sowie mit mindestens einer Antenne (5b) zur drahtlosen Datenübertragung über große Entfernungen ausgestattet ist;
- einem ersten Helligkeitssensor (6), der mit der Verarbeitungseinheit (4) verbunden, im Umhüllungskörper (2) untergebracht und nach außen gerichtet ist, um die Helligkeit einer Umgebung, in der sich das Gerät befindet, zu erfassen;
- einem zweiten Sensor (7) zur Erfassung von Umgebungsparametern, der mit der Verarbeitungseinheit (4) verbunden, im Umhüllungskörper (2) untergebracht und konfiguriert ist, um mehrere Größen zu messen, die jeweils Temperatur, Druck, Luftqualität und Luftfeuchtigkeit in der Umgebung, in der sich das Gerät befindet, darstellen;
- einem Batteriepack (3) und/oder einem an das Netz anschließbaren Netzteil, das/die im Umhüllungskörper untergebracht werden kann/können;
wobei die genannte Verarbeitungseinheit (4) dazu konfiguriert ist:
o von der Antenne des Sendeempfängers (5) ein erstes Konfigurationssignal (S1) zu empfangen, das eine Referenzzeit und/oder ein Referenzdatum des Geräts und eine Zeitfrequenz für dessen Aktivierung darstellt;
o einen Messvorgang einzuleiten, wobei:
sie an den genannten ersten (6) und den genannten zweiten Sensor (7) in Intervallen, die der genannten Zeitfrequenz entsprechen, ein zweites Abfragesignal (S2) sendet;
sie von dem genannten ersten (6) und dem genannten zweiten Sensor (7) jeweils dritte Messsignale (S3) empfängt, die die von dem ersten (6) und dem zweiten Sensor (7) nach Empfang des genannten zweiten Signals (S2) durchgeführten Messungen darstellen;
sie an die genannte Antenne (5b) des Sendeempfängers (5) ein viertes Sendesignal (S4) sendet, das Informationen enthält, die die dritten Signale (S3) darstellen, sowie eine Sendezeit und/oder ein Sendedatum des zweiten Signals (S2) und/oder eine Empfangszeit und/oder ein Empfangsdatum der dritten Signale;
wobei das System **dadurch gekennzeichnet ist, dass** es zudem Folgendes umfasst:
- mindestens einen Nachrichtenbroker (101);
- ein Modul zur Warteschlangenverwaltung (102);
- ein Konfigurationsmodul (103);
- eine oder mehrere Datenbanken (104, 105), die darauf ausgelegt sind, Daten zu enthalten, die Konfigurationseinstellungen oder Parameter des/der Geräts/Geräte zur Umgebungsüberwachung (1) darstellen, und Daten, die die von dem/den Gerät/Geräten zur Umgebungsüberwachung (1) durchgeführten Messungen darstellen;
- ein Verarbeitungsmodul (106);
- mindestens ein elektronisches Ferngerät (107), wobei:
- jedes Überwachungsgerät (1) dazu konfiguriert ist:
dem Broker (101) mit der genannten Zeitfrequenz ein sechstes Messsignal (S6) zu senden, das Informationen enthält, die dem genannten vierten Signal (S4) entsprechen;
ein siebtes Startsignal (S7) zu generieren, das eine Konfigurationsanfrage darstellt;
- der genannte Broker (101) ist so konfiguriert, dass er ein achtes Datenaktualisierungssignal (S8) generiert, das dem genannten sechsten Signal (S6) entspricht;
- das genannte Modul zur Warteschlangenverwaltung (102) so konfiguriert ist, dass es die vom Broker (101) empfangenen achten Signale (S8) sortiert und ein entsprechendes neuntes Signal (S9) an mindestens eine der genannten einen oder mehreren Datenbanken (104, 105) sendet;
- das genannte Konfigurationsmodul (103) so angeordnet ist, dass es das siebte Signal (S7) empfängt, und es so konfiguriert ist, dass es mindestens eine Datenbank (104, 105) der genannten einen oder mehreren Datenbanken (104, 105) abfragt, um Daten zu erhalten, die Konfigurationseinstellungen oder Parameter des/der Geräts/Geräte zur Umgebungsüberwachung (1) darstellen, und um das erste Konfigurationssignal (S1) zu generieren;
- das Verarbeitungsmodul (106) so konfiguriert ist, dass es die genannte eine oder die genannten mehreren Datenbanken (104, 105) abfragt und Informationen generiert, die die in der genannten einen oder den genannten mehreren Datenbanken (104, 105) enthaltenen Daten darstellen;
- das elektronische Ferngerät (107) eine Benutzerschnittstelle umfasst, die so konfiguriert ist, dass sie das Verarbeitungsmodul (106) abfragt und dem Benutzer die genannten Informationen anzeigt, die die in der genannten einen oder den genannten mehreren Datenbanken (104, 105) enthaltenen Daten darstellen.

2. System nach Anspruch 1, wobei die genannte Verarbeitungseinheit (4) des Geräts zur Umgebungsüberwachung (1) wahlweise zwischen einem ersten Ruhemodus mit niedrigem Energieverbrauch und einem zweiten Messmodus mit hohem Energieverbrauch umgeschaltet werden kann; wobei sich die genannten Verarbeitungseinheit (4) normalerweise im ersten Modus befindet und so konfiguriert ist, dass sie nur zum Durchführen des genannten Messvorgangs zwischen dem ersten und dem zweiten Modus umschaltet.

3. System nach Anspruch 1 oder 2, wobei das Gerät zur Umgebungsüberwachung (1) einen dritten Sensor (8) - vorzugsweise einen Beschleunigungssensor
- umfasst, der so konfiguriert ist, dass er Schwingungen erfasst, denen der Umhüllungskörper ausgesetzt ist, und er ein fünftes Signal (S5) erzeugt, das die genannte Detektion darstellt; wobei die genannte Verarbeitungseinheit so konfiguriert ist, dass sie den genannten Messvorgang bei Empfang des genannten fünften Signals (S5) startet und das vierte Signal (S4) integriert mit Informationen, die mit dem genannten fünften Signal (S5) in Verbindung stehen, an die genannte Antenne (5b) des Sendeempfängers(5) sendet.

4. System nach einem der vorhergehenden Ansprüche, wobei die Verarbeitungseinheit (4) des Geräts zur Umgebungsüberwachung (1) in den Sendeempfänger (5) integriert ist.

5. System nach Anspruch 1, wobei der genannte Broker ein MQTT-Protokoll verwendet.

6. System nach einem der vorhergehenden Ansprüche, wobei die genannte eine Datenbank oder die genannten mehreren Datenbanken mindestens eine erste relationale Datenbank (104) umfasst/umfassen, die darauf ausgelegt ist, Daten zu enthalten, die Konfigurationseinstellungen oder Parameter des/der Geräts/Geräte zur Umgebungsüberwachung (1) darstellen.

7. System nach einem der vorhergehenden Ansprüche, wobei die genannte eine Datenbank oder die genannten mehreren Datenbanken mindestens eine zweite relationale Datenbank und/oder Zeitreihendatenbank (105) umfasst/umfassen, die Daten enthält, die die von dem/den Gerät/Geräten zur Umgebungsüberwachung (1) durchgeführten Messungen darstellen.

## Revendications

1. Système de surveillance environnementale, comprenant :
- un dispositif de surveillance environnementale (1) pourvu de :
- un corps de confinement (2) ;
- une unité de traitement (4) logée dans ledit corps de confinement (2) ;
- un émetteur-récepteur (5) relié à l'unité de traitement (4) et pourvu d'une partie de logement (5a) pour une carte à puce (SC) et au moins une antenne (5b) pour une transmission, à longue portée, de données sans fil ;
- un premier capteur de luminosité (6) relié à l'unité de traitement (4), logé dans le corps de confinement (2), et orienté vers l'extérieur de celui-ci pour détecter la luminosité d'un environnement dans lequel le dispositif est situé ;
- un deuxième capteur (7), pour détecter des paramètres environnementaux, relié à l'unité de traitement (4), logé dans le corps de confinement (2), et configuré pour mesurer de multiples quantités qui représentent, respectivement, la température, la pression, la qualité de l'air, et le degré d'humidité dans l'environnement dans lequel le dispositif est situé ;
- un bloc-batterie (3) et/ou une unité d'alimentation électrique qui peut être reliée au réseau et qui est logée dans le corps de confinement ;
dans lequel ladite unité de traitement (4) est configurée pour :
o recevoir d'une antenne de l'émetteur-récepteur (5) un premier signal de configuration (S1), qui représente un temps et/ou une date de référence du dispositif et une fréquence temporelle pour l'activation de celui-ci ;
o lancer une procédure de mesure dans laquelle :
elle envoie auxdits premier (6) et deuxième capteurs (7) un deuxième signal d'interrogation (S2) selon des intervalles correspondant à ladite fréquence temporelle ;
elle reçoit desdits premier (6) et deuxième capteurs (7) des troisièmes signaux de mesure (S3) respectifs, qui représentent les mesures effectuées par les premier (6) et deuxième capteurs (7) après la réception dudit deuxième signal (S2) ;
elle envoie à ladite antenne (5b) de l'émetteur-récepteur (5) un quatrième signal de transmission (S4) contenant des informations qui représentent les troisièmes signaux (S3) et un temps et/ou une date de l'envoi du deuxième signal (S2) et/ou de la réception des troisièmes signaux ;
le système étant **caractérisé en ce qu'**il comprend en outre :
- au moins un agent de messages (101) ;
- un module de gestion de files d'attente (102) :
- un module de configuration (103) ;
- une ou plusieurs bases de données (104, 105) conçues pour contenir des données qui représentent des options ou des paramètres de configuration du/des dispositif(s) de surveillance environnementale (1) et des données qui représentent les mesures effectuées par le(s) dispositif(s) de surveillance environnementale (1) ;
- un module de traitement (106) ;
- au moins un dispositif électronique à distance (107),
dans lequel :
- chaque dispositif de surveillance (1) est configuré afin de :
envoyer à l'agent (101) un sixième signal de mesure (S6) contenant des informations correspondant audit quatrième signal (S4) avec ladite fréquence temporelle ;
générer un septième signal de départ (S7) qui représente une demande de configuration ;
- ledit agent (101) est configuré pour générer un huitième signal de mise à jour des données (S8) correspondant audit sixième signal (S6) ;
- ledit module de gestion de files d'attente (102) est configuré pour classer les huitièmes signaux (S8) reçus de l'agent (101) et pour envoyer un neuvième signal (S9) correspondant à au moins une base de données desdites une ou plusieurs bases de données (104, 105) ;
- ledit module de configuration (103) est agencé pour recevoir le septième signal (S7) et configuré pour interroger au moins une base de données (104, 105) desdites une ou plusieurs bases de données (104, 105) afin d'obtenir des données qui représentent des options ou des paramètres de configuration du/des dispositif(s) de surveillance environnementale (1), et générer le premier signal de configuration (S1) ;
- le module de traitement (106) est configuré pour interroger lesdites une ou plusieurs bases de données (104, 105) et pour générer des informations qui représentent les données contenues dans lesdites une ou plusieurs bases de données (104, 105) ;
- le dispositif électronique à distance (107) comprend une interface utilisateur configurée pour interroger le module de traitement (106) et afficher lesdites informations qui représentent les données contenues dans lesdites une ou plusieurs bases de données (104, 105) pour l'utilisateur.

2. Système selon la revendication 1, dans lequel ladite unité de traitement (4) du dispositif de surveillance environnementale (1) peut être commutée sélectivement d'un premier mode de repos et de faible consommation à un deuxième mode de mesure et de consommation à énergie élevée ; ladite unité de traitement (4) étant normalement dans le premier mode et configurée pour commuter du premier au deuxième mode uniquement pour effectuer ladite procédure de mesure.

3. Système selon la revendication 1 ou 2, dans lequel le dispositif de surveillance environnementale (1) comprend un troisième capteur (8) configuré pour détecter des oscillations auxquelles le corps de confinement est soumis, de préférence un accéléromètre, et pour générer un cinquième signal (S5) qui représente ladite détection ; ladite unité de traitement étant configurée pour faire démarrer ladite procédure de mesure lors de la réception dudit cinquième signal (S5) et pour envoyer le quatrième signal (S4) intégré aux informations mises en corrélation avec ledit cinquième signal (S5) à ladite antenne (5b) de l'émetteur-récepteur (5).

4. Système selon l'une quelconque des revendications précédentes, dans lequel l'unité de traitement (4) du dispositif de surveillance environnementale (1) est intégrée dans l'émetteur-récepteur (5).

5. Système selon la revendication 1, dans lequel ledit agent utilise un protocole MQTT.

6. Système selon l'une quelconque des revendications précédentes, dans lequel lesdites une ou plusieurs bases de données comprennent au moins une première base de données relationnelle (104) conçue pour contenir des données qui représentent des options ou des paramètres de configuration du/des dispositif(s) de surveillance environnementale (1).

7. Système selon l'une quelconque des revendications précédentes, dans lequel lesdites une ou plusieurs bases de données comprennent au moins une deuxième base de données relationnelle et/ou de séries temporelles (105) contenant des données qui représentent les mesures effectuées par le(s) dispositif(s) de surveillance environnementale (1).
